# EUROPÄISCHE PATENTSCHRIFT

(11) **EP 3 672 846 B1**
(45) Veröffentlichungstag und Bekanntmachung des Hinweises auf die Patenterteilung: **06.12.2023**
(21) Anmeldenummer: 18762783.1
(22) Anmeldetag: 20.08.2018
(51) Int. Cl.: B60T 7/04, B60T 13/66

(54) **VORRICHTUNG UND VERFAHREN ZUM ÜBERTRAGEN EINER PHYSIKALISCHEN GRÖSSE UNTER VERWENDUNG VON ANALOGEN SIGNALEN FÜR EINE FAHRZEUGSTEUERUNG**
DEVICE AND METHOD FOR TRANSMITTING A PHYSICAL PARAMETER USING ANALOGUE SIGNALS FOR A VEHICLE CONTROLLER
DISPOSITIF ET PROCÉDÉ DE TRANSMISSION D'UNE GRANDEUR PHYSIQUE À L'AIDE DE SIGNAUX ANALOGIQUES DESTINÉS À UNE COMMANDE DE VÉHICULE

(30) Priorität: 21.08.2017 DE 102017214554
(43) Veröffentlichungstag der Anmeldung: 01.07.2020
(73) Patentinhaber: KNORR-BREMSE Systeme für Schienenfahrzeuge GmbH, 80809 München (DE)
(72) Erfinder: HAMIDI, Mario, 80933 München (DE); STANKO, Michael, 80999 München (DE)
(86) Internationale Anmeldenummer: PCT/EP2018/072452
(87) Internationale Veröffentlichungsnummer: WO 2019/038238

(56) Entgegenhaltungen:
- DE-A1-102006 017 302
- DE-A1-102014 226 211
- US-A1- 2008 165 464
- US-A1- 2016 053 706

## Beschreibung

Die vorliegende Erfindung bezieht sich auf eine Vorrichtung und auf ein Verfahren zum Übertragen einer physikalischen Größe unter Verwendung von analogen Signalen für eine Fahrzeugsteuerung. Die Vorrichtung hat ein erstes Modul mit einem ersten und einem zweiten Signalgeber, die jeweils eine physikalische Größe in ein erstes bzw. zweites analoges Signal wandeln; und ein zweites Modul, das die analogen Signale aufnimmt und eine Plausibilität zwischen beiden analogen Signalen ermittelt.

Eine derartige Vorrichtung soll eine Information zu einer physikalischen Größe mithilfe eines analogen Signals als Informationsträgermedium zwischen zwei Modulen übertragen und dabei Fehler bei der Signalentstehung und Fehler bei der Signalübertragung erkennen. Das analoge Signal wird von signalgebenden Einheiten (i.d.R. Sensoren) erzeugt, indem sie eine physikalische Größe (zum Beispiel einen Druck oder einen Winkel) in ein analoges Signal (zum Beispiel eine elektrische Spannung oder ein elektrischer Strom) wandeln. Das analoge Signal wird dann an eine verarbeitende Einheit übertragen. Die Information zur physikalischen Größe, die aus dem analogen Signal abgeleitet wird, dient i.d.R. als Eingangsinformation für die Ausführung von sicherheitskritischen Funktionen, wie beispielswese den Bremsen eines schienengebundenen Fahrzeugs. Deswegen ist es notwendig, eine Fehlfunktion entlang des Wirkpfads von der Signalentstehung bis zur verarbeitenden Einheit zu erkennen.

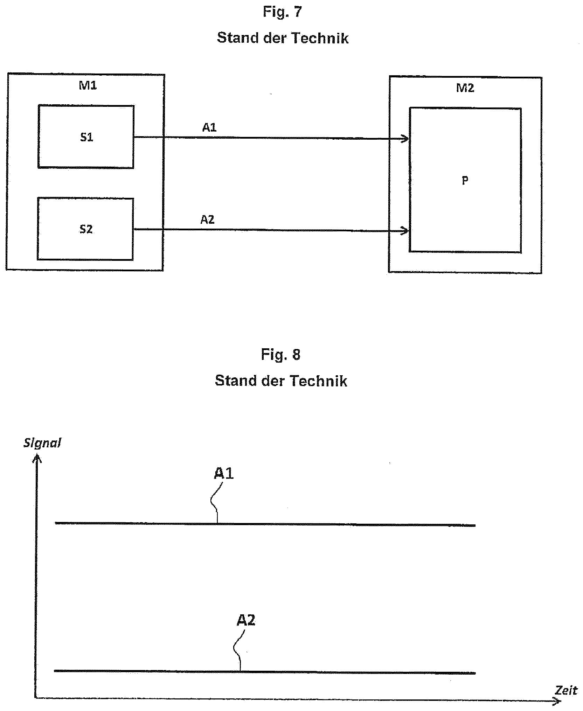

Bei derartigen Vorrichtungen aus dem Stand der Technik, wie sie in der **Fig. 7** gezeigt ist, werden zwei Sensoren S1, S2 für die Signalerzeugung einer physikalischen Größe verwendet. Beide Sensoren wandeln eine physikalische Größe jeweils in ein analoges Signal A1, A2 um, wobei die Signale vorzugsweise gegenseitig invertiert sind oder die Signalerzeugung auf unterschiedlichen Techniken beruht, um Fehler zu vermeiden, die eine gemeinsame Ursache haben.

Die beiden Sensorsignale A1, A2 werden über verschiedene Signalleitungen an die verarbeitende Einheit P übertragen. Da Fehler einer gemeinsamen Ursache vermieden werden sollen, haben die beiden analogen Signale A1, A2 vorzugsweise unterschiedliche Ausprägungen/Pegel, um dieselbe Information darzustellen, und beide analoge Signale A1, A2 können beispielsweise gegenseitig invertiert sein. Die verarbeitende Einheit P überprüft, ob die beiden Signale zueinander plausibel sind, und ermittelt die daraus zu berechnende Größe. Zwischen invertierten Signalen kann eine Plausibilität bestimmt werden, wenn deren Änderungen entsprechend invertiert sind, d.h. wenn ein Signal größer wird, muss sich das andere entsprechend verkleinern, und umgekehrt. Bei nicht invertierten Signalen kann eine Plausibilität bestimmt werden, wenn zwischen ihnen keine Abweichung auftritt, die einen bestimmten Grenzwert überschreitet.

Druckschrift DE 10 2006 017 302 A1 offenbart ein Verfahren zur Kontrolle einer Signalübertragung eines elektrischen Pedals, bei dem zueinander redundante, in Reaktion auf eine Betätigung des Pedals von n unabhängigen Sensoren erzeugte Signale m unabhängigen Signalaufbereitungen zugeleitet, von diesen zu einem m PWM-Signal aufbereitet und an einen Empfänger zur Plausibilitätsprüfung übertragen werden, wobei m und n als ganze Zahlen größer 1 und m kleiner als n gewählt werden und bei der Plausibilitätsprüfung die je ein aufbereitetes Signal bildenden aufzubereitenden Signale untereinander in eine erste und die aufbereiteten Signale untereinander in eine zweite fest vorgegebene, auf Plausibilität zu prüfende Beziehung gestellt und die Plausibilitätsprüfung der jeweiligen Beziehungen entsprechend geprüft werden. Damit wird eine Übertragung einer physikalischen Größe unter Verwendung von analogen Signalen für eine Fahrzeugsteuerung offenbart, mit einem ersten Modul, das einen ersten Signalgeber zum Wandeln einer physikalischen Größe in ein erstes analoges Signal und einem zweiten Signalgeber zum Wandeln einer physikalischen Größe in ein zweites analoges Signal aufweist, und einem zweiten Modul zum Aufnehmen der analogen Signale und zum Ermitteln einer Plausibilität zwischen beiden analogen Signalen.

In **Fig. 8** ist als Beispiel das Prinzip invertierter Signale dargestellt. Das analoge Signal A1 hat einen anderen Pegel als das analoge Signal A2. Beide Signale A1, A2 repräsentieren jedoch dieselbe Information, welche aus derselben physikalischen Größe gebildet wurde. Die verarbeitende Einheit P kennt die Gesetzmäßigkeiten, nach denen die Signale A1, A2 gebildet wurden, und kann damit erkennen, ob die beiden Signale A1, A2 zueinander plausibel sind. Wenn ein Fehler in der Signalerstellung durch den ersten Sensor S1 oder bei der Übertragung des Signals A1 aufgetreten ist, so wird die daraus berechnete Information von der aus dem zweiten Sensor S2 erstellten Information abweichen, und der Fehler wird von der verarbeitenden Einheit P erkannt. Wenn ein Fehler in der Signalerstellung durch den zweiten Sensor S2 oder bei der Übertragung des Signals A2 aufgetreten ist, so wird die daraus berechnete Information von der aus dem ersten Sensor S1 erstellten Information abweichen, und der Fehler wird ebenfalls von der verarbeitenden P Einheit erkannt. Damit wurde bisher eine Fehlfunktion bei S1, A1, S2 und A2 erkannt.

Es ist die Aufgabe der vorliegenden Erfindung, eine vereinfachte Vorrichtung und ein vereinfachtes Verfahren zum Übertragen einer physikalischen Größe unter Verwendung von analogen Signalen für eine Fahrzeugsteuerung vorzusehen, bei denen die Sicherheit der Fehlererkennung gleichzeitig verbessert werden kann.

Diese Aufgabe wird durch die Vorrichtung mit den Merkmalen des Anspruchs 1 und durch das Verfahren mit den Merkmalen des Anspruchs 10 gelöst. Vorteilhafte Weiterbildungen sind in den abhängigen Ansprüchen definiert.

Die erfindungsgemäße Vorrichtung zum Übertragen einer physikalischen Größe unter Verwendung von analogen Signalen für eine Fahrzeugsteuerung hat ein erstes Modul mit einem ersten Signalgeber zum Wandeln einer physikalischen Größe in ein erstes analoges Signal und einem zweiten Signalgeber zum Wandeln der physikalischen Größe in ein zweites analoges Signal; und ein zweites Modul zu Aufnehmen der analogen Signale und zum Ermitteln einer Plausibilität zwischen beiden analogen Signalen. Die Vorrichtung hat ferner eine Schaltvorrichtung, die dazu angepasst ist, das erste und das zweite analoge Signal abwechselnd zu dem zweiten Modul abzugeben.

Dabei ist die Schaltvorrichtung dazu angepasst, zwischen dem ersten und dem zweiten analogen Signal Referenzsignale zu dem zweiten Modul abzugeben.

Zur Signalübertragung zwischen dem ersten und dem zweiten Modul muss nur eine einzige analoge Signalleitung verwendet werden. Zwei analoge Signalleitungen wie im Stand der Technik sind nicht mehr notwendig. Dadurch werden die Anzahl der Verbindungselemente allgemein reduziert, Steckergrößen verkleinert, Kontakte reduziert und Kabellängen verringert. Die verarbeitende Einheit braucht nur noch eine einzige analoge Signalleitung einzulesen anstatt zwei wie im Stand der Technik. Dadurch wird die Anzahl der elektronischen Bauelemente auf der Platine zum Einlesen des Signals innerhalb des zweiten Moduls reduziert. Bei der verarbeitenden Einheit im zweiten Modul bleiben Eingangsschnittstellen unbelegt, die nun für weitere Funktionen genutzt werden können.

Vorzugsweise erzeugt der zweite Signalgeber das zweite analoge Signal derart, dass es bezüglich des ersten analogen Signals invertiert ist und/oder eine andere Signalweite hat. Damit kann die Fehlererkennung verbessert werden.

Vorzugsweise sind das erste und das zweite Referenzsignal jeweils Pulssignale. Weiter bevorzugt hat das erste Referenzsignal einen anderen Pegel oder eine andere Pulsweite als das zweite Referenzsignal. Weiter bevorzugt gibt zumindest eines der beiden Referenzsignale entweder eine Obergrenze oder eine Untergrenze für das erste und/oder das zweite analoge Signal an. In vorteilhafter Weise dient die Nutzung von Referenzsignalen neben der Erhöhung der Sicherheit auch als "Taktgeber", was die Robustheit eines Systems bei ständig wechselndem Signal erhöht.

Vorzugsweise ist die physikalische Größe ein Druck, ein Winkel, eine Strecke oder eine Temperatur, und der erste und der zweite Signalgeber wandeln die physikalische Größe in eine elektrische Spannung oder einen elektrischen Strom um. Die Vorrichtung zum Übertragen einer physikalischen Größe unter Verwendung von analogen Signalen für eine Fahrzeugsteuerung ist vorzugsweise Bestandteil einer Bremssteuereinrichtung für ein schienengebundenes Fahrzeug. In vorteilhafter Weise kann die Fehlererkennung bei einer derartigen Bremssteuereinrichtung verbessert werden.

Das erfindungsgemäße Verfahren zum Übertragen einer physikalischen Größe unter Verwendung von analogen Signalen für eine Fahrzeugsteuerung hat die folgenden Schritte: Wandeln einer physikalischen Größe in ein erstes analoges Signal mittels eines ersten Signalgebers eines ersten Moduls; Wandeln der physikalischen Größe in ein zweites analoges Signal mittels eines zweiten Signalgebers des ersten Moduls; abwechselndes Abgeben des ersten und des zweiten analogen Signals an ein zweites Modul; und Ermitteln einer Plausibilität zwischen dem abgegebenen ersten Signal und dem abgegebenen zweiten Signal mittels des zweiten Moduls, wobei zwischen dem ersten und dem zweiten analogen Signal (A1, A2) ein erstes Referenzsignal (R0) zu dem zweiten Modul (M2) abgegeben wird..

Nachfolgend werden Ausführungsbeispiele der vorliegenden Erfindung anhand der beigefügten Zeichnungen beschrieben. Es zeigen:
- Fig. 1: eine Vorrichtung zum Übertragen einer physikalischen Größe unter Verwendung von analogen Signalen für eine Fahrzeugsteuerung gemäß einem ersten Ausführungsbeispiel der vorliegenden Erfindung;
- Fig. 2: einen Signalverlauf bei der Vorrichtung zum Übertragen einer physikalischen Größe unter Verwendung von analogen Signalen für eine Fahrzeugsteuerung gemäß dem ersten Ausführungsbeispiel der vorliegenden Erfindung;
- Fig. 3: einen anderen Signalverlauf bei der Vorrichtung zum Übertragen einer physikalischen Größe unter Verwendung von analogen Signalen für eine Fahrzeugsteuerung gemäß dem ersten Ausführungsbeispiel der vorliegenden Erfindung;
- Fig. 4: eine Vorrichtung zum Übertragen einer physikalischen Größe unter Verwendung von analogen Signalen für eine Fahrzeugsteuerung gemäß einem zweiten Ausführungsbeispiel der vorliegenden Erfindung;
- Fig. 5: einen Signalverlauf bei der Vorrichtung zum Übertragen einer physikalischen Größe unter Verwendung von analogen Signalen für eine Fahrzeugsteuerung gemäß dem zweiten Ausführungsbeispiel der vorliegenden Erfindung;
- Fig. 6: einen anderen Signalverlauf bei der Vorrichtung zum Übertragen einer physikalischen Größe unter Verwendung von analogen Signalen für eine Fahrzeugsteuerung gemäß dem zweiten Ausführungsbeispiel der vorliegenden Erfindung;
- Fig. 7: eine Vorrichtung zum Übertragen einer physikalischen Größe unter Verwendung von analogen Signalen für eine Fahrzeugsteuerung gemäß dem Stand der Technik;
- Fig. 8: einen Signalverlauf bei der Vorrichtung zum Übertragen einer physikalischen Größe unter Verwendung von analogen Signalen für eine Fahrzeugsteuerung gemäß dem Stand der Technik.

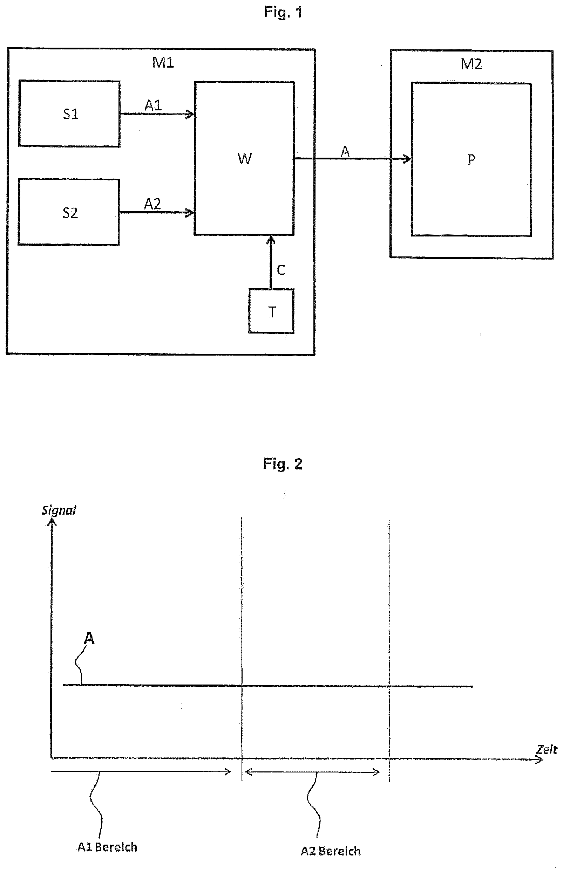

Die **Fig. 1** zeigt eine Vorrichtung zum Übertragen einer physikalischen Größe unter Verwendung von analogen Signalen für eine Fahrzeugsteuerung gemäß einem ersten Ausführungsbeispiel der vorliegenden Erfindung. Die Vorrichtung hat ein erstes Modul M1 mit einem ersten Signalgeber S1, der eine physikalische Größe in ein erstes analoges Signal A1 wandelt, und einem zweiten Signalgeber S2, der die physikalische Größe in ein zweites analoges Signal A2 wandelt; und ein zweites Modul M2, das die analogen Signale A1, A2 aufnimmt und eine Plausibilität zwischen beiden analogen Signalen A1, A2 ermittelt. Darüber hinaus hat die Vorrichtung eine Schaltvorrichtung W, die das erste und das zweite analoge Signal A1, A2 abwechselnd zu dem zweiten Modul M2 abgibt. Das gegenwärtig zu dem zweiten Modul M2 abgegebene Signal wird auch als geschaltetes analoges Signal A bezeichnet.

Zusätzlich kann eine Steuereinheit T, die ein Steuersignal C zu der Schaltvorrichtung W abgibt, innerhalb des ersten Moduls M1 vorgesehen sein. Die Schaltvorrichtung W und die Steuereinheit T sind hier von ihrer Funktion logisch getrennt, können physikalisch aber auch eine Einheit bilden. Die Schaltvorrichtung W schaltet in regelmäßigen Zeitabständen zwischen den beiden analogen Signalen A1 und A2 hin und her und gibt das gegenwärtig geschaltete Signal A an die verarbeitende Einheit P weiter. Um ein Verwechseln des ersten analogen Signals A1 und des zweiten analogen Signals A2 auf der Empfängerseite durch das zweite Modul M2 auszuschließen, empfiehlt es sich, die Zeitabstände bzw. Signalweiten, in denen das erste analoge Signal A1 und das zweite analoge Signal A2 auf der Signalleitung durchgeschaltet werden, unterschiedlich lang zu wählen. Im dargestellten Ausführungsbeispiel sind die Signalweiten nur beispielhaft gleich lang gewählt, um das Verständnis der Erfindung zu erleichtern.

An der verarbeitenden Einheit P kommt damit die Information beider analoger Signale A1, A2 über dieselbe Signalleitung zeitlich versetzt im zweiten Modul M2 an. Bei ausreichend trägen Systemen, in denen sich die physikalische Größe gegenüber der Zeitdauer der Schaltvorgänge nur langsam ändert, prüft die verarbeitende Einheit P beide analogen Signale A1, A2 auf Plausibilität.

Die **Fig. 2** zeigt einen Signalverlauf bei der Vorrichtung zum Übertragen einer physikalischen Größe unter Verwendung von analogen Signalen für eine Fahrzeugsteuerung gemäß dem ersten Ausführungsbeispiel der vorliegenden Erfindung.

Bei diesem Ausführungsbeispiel kommt im zweiten Modul M2 ein geschaltetes Signal A an, welches nicht springt. Der große Vorteil bei diesem Ausführungsbeispiel ist, dass die verarbeitende Einheit P (noch) nicht wissen muss, dass das derzeit geschaltete analoge Signal A eigentlich aus zwei analogen Signalen A1, A2 gebildet ist. Dadurch wird der Implementierungsaufwand für das zweite Modul M2 bei weiterhin hoher Sicherheit minimiert. Bei diesem Ausführungsbeispiel wird ein Fehler durch eine vereinfachte Plausibilitätsprüfung aufgedeckt. Die Plausibilitätsprüfung reduziert sich zu einer "Sprungüberwachung". Wenn ein Fehler in den Signalgebern S1, S2, in der Schaltvorrichtung W oder der Steuereinheit T auftritt, ergibt sich ein spontaner Sprung im gegenwärtig geschalteten Signal A, welches dann von der verarbeitenden Einheit P erkannt werden kann.

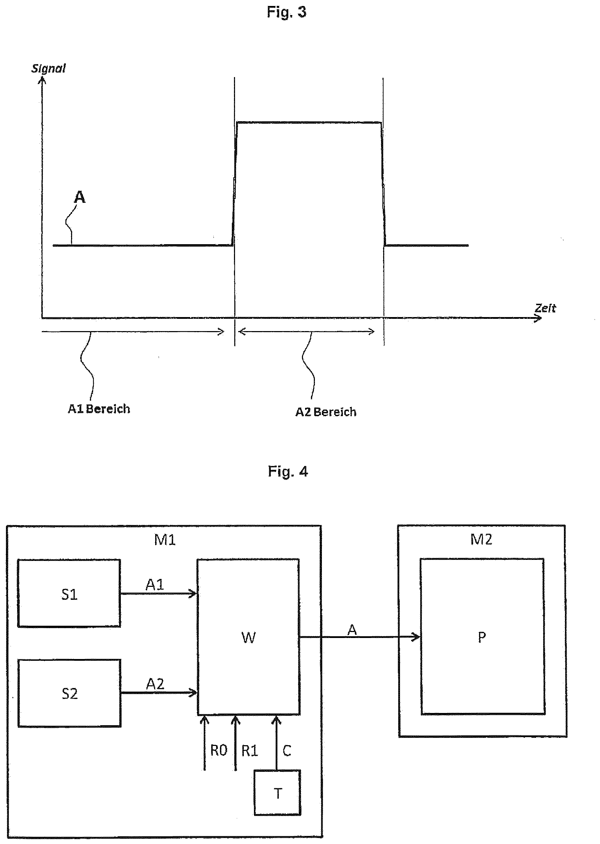

Die **Fig. 3** zeigt einen anderen Signalverlauf bei der Vorrichtung zum Übertragen einer physikalischen Größe unter Verwendung von analogen Signalen für eine Fahrzeugsteuerung gemäß dem ersten Ausführungsbeispiel der vorliegenden Erfindung.

Hier erzeugt der zweite Signalgeber S2 das zweite analoge Signal A2 derart, dass es bezüglich des von dem ersten Signalgeber S1 erzeugten, ersten analogen Signals A1 invertiert ist. Alternativ oder zusätzlich kann das erste analoge Signal A1 eine andere Schaltzeit bzw. Signalweite als das zweite analoge Signal A2 haben (in der Fig. 3 als "A1 Bereich" und "A2 Bereich" bezeichnet). Diese Varianten können gewählt werden, wenn es keine besonderen Anforderungen an einer "frühzeitigen Fehlererkennung" gibt, sondern es ausreicht, wenn Fehler dann erkannt werden, wenn diese auftreten (d.h. wenn das erste analoge Signal A1 vom zweiten analogen Signal A2 abweicht), und/oder wenn die verarbeitende Einheit P die Zeiten, in denen die analogen Signale A1 oder A2 von der Schaltvorrichtung W durchgeschaltet werden, eigenständig präzise genug berechnen kann und somit selbständig voraussagen kann, wann ein Wechsel zwischen den beiden analogen Signalen A1 und A1 stattfinden wird. Im dargestellten Ausführungsbeispiel sind die Signalweiten nur beispielhaft etwa gleich lang gewählt, um das Verständnis der Erfindung zu erleichtern.

Die **Fig. 4** zeigt eine Vorrichtung zum Übertragen einer physikalischen Größe unter Verwendung von analogen Signalen für eine Fahrzeugsteuerung gemäß einem zweiten Ausführungsbeispiel der vorliegenden Erfindung. Die Vorrichtung zum Übertragen einer physikalischen Größe unter Verwendung von analogen Signalen für eine Fahrzeugsteuerung gemäß dem zweiten Ausführungsbeispiel ähnelt dem ersten Ausführungsbeispiel mit der Ausnahme, dass zusätzlich zwei Referenzsignale R0, R1 hinzugefügt und zwischen jedem Schaltspiel zwischen den analogen Signalen A1, A2 zwischengeschaltet werden, so dass die Schaltvorrichtung W insgesamt vier Signale A1, R0, A2, R1 der Reihe nach durchschaltet. Die Referenzsignale R0, R1 sind unveränderliche Signale, deren Pegel für den jeweiligen Anwendungsfall definiert werden. Das erste Referenzsignal R0 bildet vorzugsweise eine untere Grenze des Signalpegels, und das zweite Referenzsignale R1 bildet vorzugsweise eine obere Grenze des Signalpegels. Die verarbeitende Einheit P kennt diese beiden Grenzpegel.

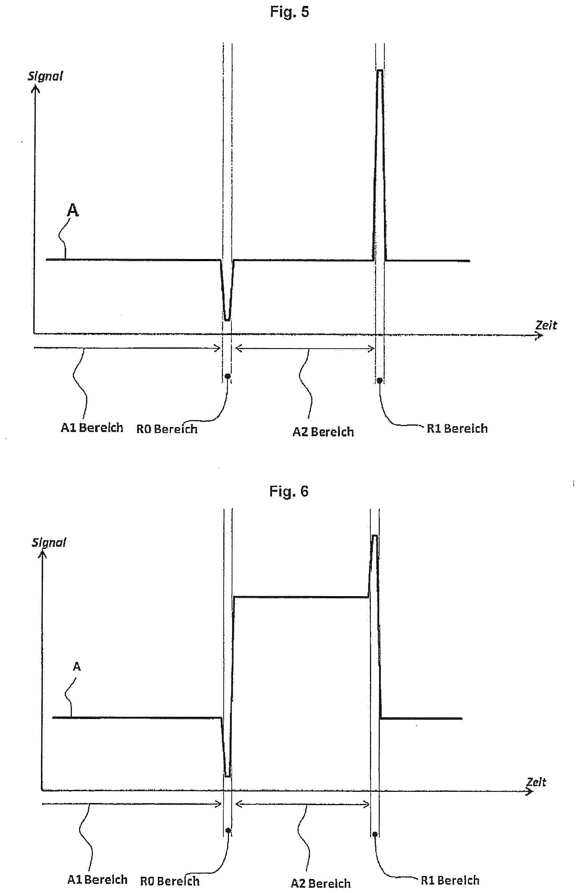

Die **Fig. 5** zeigt einen Signalverlauf bei der Vorrichtung zum Übertragen einer physikalischen Größe unter Verwendung von analogen Signalen für eine Fahrzeugsteuerung gemäß dem zweiten Ausführungsbeispiel der vorliegenden Erfindung. Die Schaltvorrichtung W gibt zwischen dem ersten analogen Signal A1 und dem zweiten analogen Signal A2 das erste Referenzsignal R0 zu dem zweiten Modul M2 ab, und sie gibt zwischen dem zweiten analogen Signal A2 und dem ersten analogen Signal A1 das zweite Referenzsignal R1 zu dem zweiten Modul M2 ab. Das erste und das zweite Referenzsignal R0, R1 sind jeweils Pulssignale, und das erste Referenzsignal R0 hat einen anderen Pegel als das zweite Referenzsignal R1. Alternativ kann das erste Referenzsignal R0 eine andere Pulsweite als das zweite Referenzsignal R1 haben (in der Fig. 5 als "R0 Bereich" und "R1 Bereich" bezeichnet). Wie bereits erwähnt geben die beiden Referenzsignale R0, R1 vorzugsweise entweder eine Obergrenze oder eine Untergrenze für das erste und/oder das zweite analoge Signal A1, A2 an.

Da die beiden Referenzsignale R0, R1 während einer Anwendung nicht verändert werden und bekannt sind, kann die verarbeitende Einheit P die beiden Referenzsignale R0, R1 und das geschaltete analoge Signal A nutzen, um Fehler in der Signalübertragung zu erkennen. Zusätzlich können die Referenzsignale R0, R1 genutzt werden, um einen Schaltwechsel zwischen den analogen Signalen A1, A2 an die verarbeitende Einheit P anzukündigen, was das Systemverhalten robust gegenüber Systemen mit dynamischen Änderungen der ermittelnden physikalischen Größe macht. Da die wesentliche Funktion das Übertragen der analogen Signale A1 und A2 ist, sind die Schaltzeiten der beiden Referenzsignale R0 und R1 im Verhältnis zu den Schaltzeiten der analogen Signale A1, A2 i.d.R. kurz.

Die **Fig. 6** zeigt einen anderen Signalverlauf bei der Vorrichtung zum Übertragen einer physikalischen Größe unter Verwendung von analogen Signalen für eine Fahrzeugsteuerung gemäß dem zweiten Ausführungsbeispiel der vorliegenden Erfindung. Dort ist das geschaltete analoge Signal A, welches von der Schaltvorrichtung W zur verarbeitenden Einheit P abgegeben wird, schematisch dargestellt. Das erste analoge Signal A1 ist zum zweiten analogen Signal A2 invertiert. Zu Beginn schaltet die Schaltvorrichtung W das erste analoge Signal A1 als das geschaltete analoge Signal A durch. Kurz bevor die Schaltvorrichtung W auf das zweite analoge Signal A2 umschaltet, wird auf R0 (oder R1) zwischengeschaltet. Der Sprung des geschalteten Signals A auf das erste Referenzsignal R0 kündigt den Schaltwechsel zum zweiten analogen Signal A2 an. Zusätzlich wird damit die korrekte Signalübertragung zwischen beiden Modulen M1, M2 getestet, da die verarbeitende Einheit P den analogen Wert des ersten Referenzsignals R0 erwartet. Es spielt keine Rolle, ob zuerst (wie hier dargestellt) auf das erste Referenzsignal R0 und dann auf das zweite Referenzsignal R1 geschaltet wird, oder zuerst auf das zweite Referenzsignal R1 und dann auf das erste Referenzsignal R0.

Die Zeitdauer, in denen die Signale A1, A2, R0 und R1 durchgeschaltet werden, sind hier nur beispielhaft dargestellt; grundsätzlich hängen die Zeitdauern, in denen die einzelnen Signale durchgeschaltet werden, von der Dynamik des zu messenden Systems und von der Rechenleistung der verarbeitenden Einheit P und der Schaltvorrichtung Wab.

Die Erfindung bietet vielfältige Vorteile. Zur Signalübertragung zwischen dem ersten Modul M1 und dem zweiten Modul M2 muss nur eine einzige Signalleitung für das gegenwärtig geschaltete analoge Signal A verwendet werden. Zwei Signalleitungen sind nicht mehr notwendig. Dadurch werden u. A. die Verbindungselemente allgemein reduziert, Steckergrößen verkleinert, Kontakte reduziert, Kabellängen verringert. Die verarbeitende Einheit P braucht nur noch ein analoges Signal A einzulesen anstatt zwei. Dadurch wird die Anzahl der elektronischen Bauelemente auf der Platine zum Einlesen des Signals innerhalb des zweiten Moduls M2 reduziert (zum Beispiel auf der Eingangsschaltung). Bei der verarbeitenden Einheit P im zweiten Modul M2 bleiben Eingangsschnittstellen unbelegt, die nun für weitere Funktionen genutzt werden können.

Nach bisherigem Stand der Technik wird ein Fehler nur dann erkannt, wenn sich das analoge Signal A in jenem Wertebereich befindet, in dem der Fehler auftritt. Durch das Zwischenschalten der Referenzsignale R0, R1 ggf. mit minimaler und maximaler Grenze, werden auch Fehler in Wertebereichen erkannt, bevor sich die analogen Signale A1, A2 in den fehlerhaften Wertebereich bewegt. Fehler werden durch die Referenzsignale R0, R1 demnach frühzeitig erkannt. Des Weiteren werden durch die Referenzsignale R0, R1 Fehler beim Einlesen im zweiten Modul M2 besser erkannt. Damit wird zugleich die Sicherheit des Systems erhöht.

Als Anwendung in der Praxis empfehlen sich v. a. zwei Varianten:
1) Übertragung von zwei invertierten Signalen A1, A2 mit Referenzsignalen R0, R1

Die Nutzung von Referenzsignalen R0, R1 dient neben der Erhöhung der Sicherheit auch als "Taktgeber", was die Robustheit eines Systems bei ständig wechselndem Signal erhöht. Wenn abwechselnd invertierte Signale A1, A2 verwendet werden und/oder hohe Anforderungen an die Sicherheit bei der Signalübertragung gestellt werden, sollten daher Referenzsignale R0, R1 mitgesendet werden.

2) Übertragung von zwei gleichartigen Signalen A1, A2 ohne Referenzsignal R0, R1 Wenn das Niveau beider Signale A1, A2 identisch zur selben Information ist, wird kein Taktgeber mehr benötigt. Sofern eine ausreichend hohe Sicherheit gegeben ist, sollte dann auf die Referenzsignale R0, R1 verzichtet werden, um den Implementierungsaufwand zu minimieren.

Bei der vorliegenden Erfindung kann die physikalische Größe ein Druck, ein Winkel, eine Strecke oder eine Temperatur sein. Üblicherweise wandeln der erste und der zweite Signalgeber S1, S2 die physikalische Größe in eine elektrische Spannung oder einen elektrischen Strom um.

Die vorliegende Erfindung ist besonders für eine Bremssteuereinrichtung für ein schienengebundenes Fahrzeug geeignet, indem die Vorrichtung zum Übertragen einer physikalischen Größe unter Verwendung von analogen SignalenA1, A2 dort implementiert wird.

### BEZUGSZEICHENLISTE

- M1: erstes Modul
- M2: zweites Modul
- S1: erster Signalgeber
- S2: zweiter Signalgeber
- A1: erstes analoges Signal
- A2: zweites analoges Signal
- A: geschaltetes analoges Signal
- P: verarbeitende Einheit
- W: Schaltvorrichtung
- R0: erstes Referenzsignal
- R1: zweites Referenzsignal
- T: Steuereinheit
- C: Steuersignal

## Patentansprüche

1. Vorrichtung zum Übertragen einer physikalischen Größe unter Verwendung von analogen Signalen (A1, A2) für eine Fahrzeugsteuerung, mit:
einem ersten Modul (M1), das einen ersten Signalgeber (S1) zum Wandeln einer physikalischen Größe in ein erstes analoges Signal (A1) und einen zweiten Signalgeber (S2) zum Wandeln der physikalischen Größe in ein zweites analoges Signal (A2) aufweist; und
einem zweiten Modul (M2) zum Aufnehmen der analogen Signale (A1, A2) und zum Ermitteln einer Plausibilität zwischen beiden analogen Signalen (A1, A2),
**gekennzeichnet durch**
eine Schaltvorrichtung (W), die dazu angepasst ist, das erste und das zweite analoge Signal (A1, A2) abwechselnd zu dem zweiten Modul (M2) abzugeben, wobei die Schaltvorrichtung (W) dazu angepasst ist, zwischen dem ersten und dem zweiten analogen Signal (A1, A2) ein erstes Referenzsignal (R0) zu dem zweiten Modul (M2) abzugeben.

2. Vorrichtung gemäß Anspruch 1, wobei die Schaltvorrichtung (W) dazu angepasst ist, das erste und das zweite analoge Signal (A1, A2) abwechselnd zu dem zweiten Modul (M2) über eine einzige Signalleitung abzugeben.

3. Vorrichtung gemäß Anspruch 1 oder 2, wobei der zweite Signalgeber (S2) das zweite analoge Signal (A2) so erzeugt, dass es bezüglich des durch den ersten Signalgeber (S1) erzeugten, ersten analogen Signals (A1) invertiert ist und/oder eine andere Signalweite aufweist.

4. Vorrichtung gemäß einem der vorherigen Ansprüche, wobei die Schaltvorrichtung (W) dazu angepasst ist, zwischen dem zweiten und dem ersten analogen Signal (A2, A1) ein zweites Referenzsignal (R1) zu dem zweiten Modul (M2) abzugeben.

5. Vorrichtung gemäß einem der vorangehenden Ansprüche, wobei das erste und das zweite Referenzsignal (R0, R1) jeweils Pulssignale sind.

6. Vorrichtung gemäß Anspruch 5, wobei das erste Referenzsignal (R0) einen anderen Pegel oder eine andere Pulsweite hat als das zweite Referenzsignal (R1).

7. Vorrichtung gemäß einem der vorangehenden Ansprüche, wobei zumindest eines der beiden Referenzsignale (R0, R1) entweder eine Obergrenze oder eine Untergrenze für das erste und/oder das zweite analoge Signal (A1, A2) angibt.

8. Vorrichtung gemäß einem der vorherigen Ansprüche, wobei die physikalische Größe ein Druck, ein Winkel, eine Strecke oder eine Temperatur ist, und
der erste und der zweite Signalgeber (S1, S2) die physikalische Größe in eine elektrische Spannung oder einen elektrischen Strom umwandeln.

9. Bremssteuereinrichtung für ein schienengebundenes Fahrzeug, die eine Vorrichtung zum Übertragen einer physikalischen Größe unter Verwendung von analogen Signalen gemäß einem der vorherigen Ansprüche aufweist.

10. Verfahren zum Übertragen einer physikalischen Größe unter Verwendung von analogen Signalen für eine Fahrzeugsteuerung, mit den folgenden Schritten:
Wandeln einer physikalischen Größe in ein erstes analoges Signal (A1) mittels eines ersten Signalgebers (S1) eines ersten Moduls (M1);
Wandeln der physikalischen Größe in ein zweites analoges Signal (A2) mittels eines zweiten Signalgebers (S2) des ersten Moduls (M1);
**gekennzeichnet durch**
abwechselndes Abgeben des ersten und des zweiten analogen Signals (A1, A2) an ein zweites Modul (M2);
Ermitteln einer Plausibilität zwischen dem abgegebenen ersten Signal (A1) und dem abgegebenen zweiten Signal (A2) mittels des zweiten Moduls (M2), wobei
zwischen dem ersten und dem zweiten analogen Signal (A1, A2) ein erstes Referenzsignal (R0) zu dem zweiten Modul (M2) abgegeben wird.

## Claims

1. A device for transmitting a physical parameter using analogue signals (A1, A2) for a vehicle controller, comprising:
a first module (M1) that has a first transducer (S1) for converting a physical parameter into a first analogue signal (A1) and a second transducer (S2) for converting the physical parameter into a second analogue signal (A2); and
a second module (M2) for receiving the analogue signals (A1, A2) and for determining a plausibility between the two analogue signals (A1, A2),
**characterised by**
a switching device (W) that is set to emit the first and second analogue signals (A1, A2) alternately to the second module (M2), the switching device (W) being set to emit a first reference signal (R0) to the second module (M2) between the first and second analogue signals (A2, A2)

2. A device according to claim 1, the switching device (W) being set to emit the ) first and second analogue signals (A1, A2) alternately to the second module (M2) via a single signal line.

3. A device according to claim 1 or claim 2, the second transducer (S2) generating the second analogue signal (A2) such that it is inverted in relation to the first analogue signal (A1) generated by the first transducer (S1) and/or has another signal width.

4. A device according to any one of the preceding claims, the switching device W) being set to emit a second reference signal (R1) to the second module (M2) between the second and the first analogue signals (A2, A1).

5. A device according to any one of the preceding claims, the first and second reference signals (R0, R1) each being pulse signals.

6. A device according to claim 5, the first reference signal (R0) having a level or 1 pulse width different to that of the second reference signal (R1).

7. A device according to any one of the preceding claims, at least one of the two reference signals (R0, R1) indicating either an upper limit or a lower limit for the first and/or the second analogue signal (A1, A2).

8. A device according to any one of the preceding claims, the physical parameter being a pressure, an angle, a route or a temperature, and
the first and second transducers (S1, S2) converting the physical parameter into an electrical voltage or an electrical current.

9. A brake control device for a rail-bound vehicle that has a device for transmitting a physical parameter using analogue signals according to any one of the preceding claims.

10. A method for transmitting a physical parameter using analogue signals for a vehicle controller, comprising the following steps:
the conversion of a physical parameter into a first analogue signal (A1) by means of a first transducer (S1) of a first module (M1);
the conversion of the physical parameter into a first analogue signal (A1) by means of a second transducer (S2) of the first module (M1);
**characterised by**
the alternating emission of the first and second analogue signals (A1, A2) to a second module (M2);
the determination of a plausibility between the emitted first signal (A1) and the emitted second signal (A2) by means of the second module (M2),
a first reference signal (R0) being emitted to the second module (M2) between the first and second analogue signals (A1, A2).

## Revendications

1. Dispositif de transmission d'une grandeur physique en utilisant des signaux (A1, A2) analogiques pour une commande de véhicule, comprenant :
un premier module (M1), qui a un premier émetteur (S1) de signal pour la transformation d'une grandeur physique en un premier signal (A1) analogique et un deuxième émetteur (S2) de signal pour la transformation de la grandeur physique en un deuxième signal (A2) analogique ; et
un deuxième module (M2) de réception des signaux (A1, A2) analogiques et de détermination d'une vraisemblance entre deux signaux (A1, A2) analogiques,
**caractérisé par**
un dispositif (W) de commutation, qui est adapté pour que le premier et le deuxième signal (A1, A2) analogiques soient en alternance envoyés au deuxième module (M2), dans lequel le dispositif (W) de commutation est adapté pour envoyer au deuxième module (M2) un premier signal (R0) de référence entre le premier et le deuxième signal (A1, A2) analogiques.

2. Dispositif suivant la revendication 1, dans lequel le dispositif (W) de commutation est adapté pour envoyer le premier et le deuxième signal (A1, A2) analogiques en alternance au deuxième module (M2) par une ligne de signal unique.

3. Dispositif suivant la revendication 1 ou 2, dans lequel le deuxième émetteur (S2) de signal produit le deuxième signal (A2) analogique, de manière à ce qu'il soit inversé par rapport au premier signal (A1) analogique produit par le premier émetteur (S1) de signal et/ou de manière à ce qu'il ait une autre largeur de signal.

4. Dispositif suivant l'une des revendications précédentes, dans lequel le dispositif (W) de commutation est adapté pour envoyer au deuxième module (M2) un deuxième signal (R1) de référence entre le deuxième et le premier signal (A2, A1) analogiques.

5. Dispositif suivant l'une des revendications précédentes, dans lequel le premier et le deuxième signal (R0, R1) de référence sont des signaux à impulsion.

6. Dispositif suivant la revendication 5, dans lequel le premier signal (R0) de référence a un niveau autre ou une largeur d'impulsion autre que le deuxième signal (R1) de référence.

7. Dispositif suivant l'une des revendications précédentes, dans lequel au moins l'un des deux signaux (Ra, R1) de référence indique soit une limite supérieure soit une limite inférieure du premier et/ou du deuxième signal (A1, A2) analogiques.

8. Dispositif suivant l'une des revendications précédentes, dans lequel la grandeur physique est une pression, un angle, une distance ou une température, et
le premier et le deuxième émetteurs (S1, S2) de signal transforment la grandeur physique en une tension électrique ou en un courant électrique.

9. Dispositif de commande de frein d'un véhicule guidé sur rail, qui a un dispositif de transmission d'une grandeur physique en utilisant des signaux analogiques suivant l'une des revendications précédentes.

10. Procédé de transmission d'une grandeur physique en utilisant des signaux analogiques pour une commande de véhicule, comprenant les stades suivants :
transformation d'une grandeur physique en un premier signal (A1) analogique au moyen d'un premier émetteur (S1) de signal d'un premier module (M1) ;
transformation de la grandeur physique en un deuxième signal (A2) analogique au moyen d'un deuxième émetteur (S2) de signal du premier module (M1) ;
**caractérisé par**
l'envoi en alternance du premier et du deuxième signal (A1, A2) analogiques à un deuxième module (M2) ;
la détermination d'une vraisemblance entre le premier signal (A1) envoyé et le deuxième signal (A2) envoyé au moyen du deuxième module (M2), dans lequel
on envoie un premier signal (R0) de référence au deuxième module (M2) entre le premier et le deuxième signal (A1, A2) analogiques.
